# EUROPÄISCHE PATENTSCHRIFT

(11) **EP 1 994 215 B1**
(45) Veröffentlichungstag und Bekanntmachung des Hinweises auf die Patenterteilung: **13.04.2016**
(21) Anmeldenummer: 07704655.5
(22) Anmeldetag: 20.02.2007
(51) Int. Cl.: B29L 31/00, B29L 31/28, B29K 101/12, B29C 65/00, B29C 65/20, B29C 65/06, D06F 37/26

(54) **HAUSHALTGERÄT MIT EINEM LAUGENBEHÄLTER**
HOUSEHOLD APPLIANCE WITH A LYE CONTAINER
APPAREIL MÉNAGER MUNI D'UN RÉSERVOIR À LESSIVE

(30) Priorität: 07.03.2006 DE 102006010518; 08.03.2006 DE 102006010788
(43) Veröffentlichungstag der Anmeldung: 26.11.2008
(73) Patentinhaber: BSH Hausgeräte GmbH, 81739 München (DE)
(72) Erfinder: WILDUNG, Wilfried, 14169 Berlin (DE); EMMERICH, Frank, 12161 Berlin (DE); GRAMM, Georg, 14612 Falkensee (DE)
(86) Internationale Anmeldenummer: PCT/EP2007/051582
(87) Internationale Veröffentlichungsnummer: WO 2007/101781

(56) Entgegenhaltungen:
- EP-A- 1 522 624
- EP-A2- 0 798 412
- FR-A1- 2 789 620
- US-A- 3 185 255

## Beschreibung

Die Erfindung betrifft ein Haushaltgerät, das einen Laugenbehälter, der zumindest bereichsweise aus Kunststoff ausgebildet ist, und mindestens ein Ballastgewicht mit wenigstens einem Kunststoffkörper aufweist, das an dem Laugenbehälter befestigt ist, wobei die mechanische Verbindung des Kunststoffkörpers des Ballastgewichts mit einem Kunststoffbereich des Laugenbehälter durch ein Kunststoffschweißverfahren erzeugt ist.

Neben der Befestigung von Ballastgewichten durch Reib- und/oder Formschluss mittels Schrauben oder mittels eines Spannbandes ist auch die Befestigung durch ein Kunststoffschweißverfahren bekannt. So offenbart die DE 693 07 668 T2 eine Waschmaschine oder einen kombinierten Waschtrockner, bei dem an einem Laugenbehälter aus Kunststoff zumindest ein Ballastgewicht befestigt ist. Das Ballastgewicht weist einen hohlen Kunststoffbehälter auf, in dem als Ballastmaterial Wasser eingefüllt werden kann. Der Kunststoffbehälter weist ein Kunststoffvorsprungselement auf, welches passgenau und damit formschlüssig mit einem entsprechenden Kunststoffvorsprungselement am Laugenbehälter zusammenpasst. Der Kunststoffbehälter wird derart an dem Laugenbehälter angeordnet, dass die beiden Kunststoffvorsprungselemente formschlüssig verbunden werden, wobei die Paare der zusammenpassenden Varsprungselernente nach dem Fügen durch Schmelzverschweißen des Kunststoffmaterials fest miteinander verbunden werden. Darüber hinaus ist In dieser DE 693 07 668 T2 auch Stand der Technik erwähnt, der als Ballastgewichte Betonblöcke enthält, die von einer Kunststoffhülle vollständig umgeben sind. Auch ist daraus eine Verbindung dieser Kunststoffhülle mit einem Laugenbehälter durch ein Kunststoffschweißverfahren bekannt. Das Anbringen der Ballastgewichte an einen Laugenbehälter ist bei den bekannten Haushaltgeräten relativ aufwändig. Stets muss zunächst die Formschlüssigkeit zwischen den Elementen hergestellt werden.

Aus EP 1 522 624 A2 ist eine weitere Waschmaschine bekannt, die einen Laugenbahälter aus Kunststoff mit einem Ballastgewicht umfasst. Das Ballastgewicht besteht einem Kunststoffkörper, der mit Beton ausgefüllt sein kann. Zum Verbinden des Laugenbehälters mit dem Kunststoffkörper werden korrespondierende Kontaktflächen, welche erhabene Verbindungselemente aufweisen, mittels eines Kunststoffschweißverfahrens miteinander stoffschlüssig verbunden.

Daher ist es eine Aufgabe der vorliegenden Erfindung, ein Haushaltgerät der eingangs genannten Art zu schaffen, bei dem eine Verbindung zwischen einem Ballastgewicht und einem Laugenbehälter aufwandsarm und sicher ausgebildet werden kann. Diese Aufgabe wird durch ein Haushaltgerät gelöst, das die Merkmale des in Patentanspruch 1 oder 13 angegebenen Kennzeichens aufweist.

In einem erfindungsgemäßen Haushaltgerät ist an dem Kunststoffkörper des Ballastgewichts und/oder an dem Kunststoffbereich des Laugenbehälters zumindest ein erhabenes Verbindungselement ausgebildet, welches mit einer Kontaktfläche des zu verbindenden Kunststoffbereichs bzw. des zu verbindenden Kunststoffkörpers kontaktierbar ist, wobei die erhabenen Verbindungselemente durch das Kunststoffschweißverfahren stoffschlüssig mit der Kontaktfläche verbindbar sind.

Das Haushaltgerät umfasst zumindest ein Ballastgewicht, wobei das Ballastgewicht zumindest einen Kunststoffkörper aufweist. Das Ballastgewicht ist an dem Laugenbehälter befestigt, wobei die mechanische Verbindung zwischen dem Kunststoffkörper des Ballastgewichts und einem Kunststoffbereich des Laugenbehälters durch ein Kunststoffschweißverfahren hergestellt ist.

Im Falle einer Geschirrspülmaschine als Haushaltgerät kann das Ballastgewicht anstelle an einem Laugenbehälter auch an einem aus Kunststoff bestehenden Gehäuseteil in gleicher Weise angebracht sein. Ein wesentlicher Gedanke der Erfindung besteht nämlich darin, dass an dem Kunststoffkörper des Ballastgewichts oder dem Kunststoffbereich, an dem das Ballastgewicht anzubringen ist, zumindest ein erhabenes Verbindungselement ausgebildet ist, welches mit der Kontaktfläche des zu verbindenden Kunststoffbereichs in Kontakt gebracht wird und anschließend das erhabene Verbindungselement durch das Kunststoffschweißverfahren stoffschlüssig mit der Kontaktfläche zum Herstellen der mechanischen Verbindung zwischen den Kunststoffbereichen verbindbar ist.

Die mechanische Verbindung zwischen dem Ballastgewicht und dem Laugenbehälter kann dadurch aufwandsarm und dennoch sicher ausgebildet werden. Ein vorab formschlüssiges Anfügen des Ballastgewichts an den Laugenbehälter ist nicht mehr erforderlich. Das erhabene Verbindungselement erstreckt sich somit in Richtung der Kontaktfläche des Kunststoffbereichs, mit dem das Verbindungselement stoffschlüssig verbunden werden soll und ermöglicht dadurch ein einfaches Ausführen des Verbindens durch ein Kunststoffschweißverfahren.

Vorteilhafte Ausgestaltungen der Erfindung sind in den Unteransprüchen gekennzeichnet und können einzeln oder in beliebiger Kombination miteinander bzw. mit der Erfindung gemäß Anspruch 1 kombiniert werden.

In vorteilhafter Weise ist das Ballastgewicht aus zumindest zwei festen Materialien ausgebildet, wobei ein Material durch den Kunststoffkörper gegeben ist und zumindest ein weiterer Teil des Körpers aus festem Material mit dem Kunststoffkörper verbunden ist. In bevorzugter Weise ist das zweite feste Material Beton oder eine Betonverbindung. Dadurch kann ein geeignetes schweres Ballastgewicht geschaffen werden, welches als Gegengewicht besonders geeignet ist. Das zweite feste Material kann aber auch ein Grauguss oder ein Stahlguss sein.

Solche an einem Laugenbehälter befestigten Ballastgewichte dienen dazu, im Falle einer Waschmaschine diesen Laugenbehälter auszuwuchten, d. h. um seine Trägheit zu erhöhen und folglich die Schwingungen zu begrenzen, die an dem Laugenbehälter während einer Schleuderphase erzeugt werden. Dies ist insbesondere dann vorteilhaft, wenn eine Trommel der Waschmaschine mit Wäschestücken gefüllt ist und mit einer relativ hohen Umdrehungsgeschwindigkeit angetrieben wird. Die oben genannten Schwingungen werden durch Bedingungen bewirkt, die sich aus einer nicht gleichmäßigen Verteilung der Wäschestücke entlang der zylindrischen Wand der Trommel ergeben.

Im Falle einer Geschirrspülmaschine kann das Ballastgewicht aber auch an einem aus Kunststoff ausgebildeten, hinteren Gehäuseteil angebracht werden. Hierbei dient das Ballastgewicht dazu, das Gewicht der nach vorn geöffneten Zugangstür der Geschirrspülmaschine nach hinten hin auszugleichen, damit die Geschirrspülmaschine bei geöffneter Türklappe nicht nach vorn stürzt.

In vorteilhafter Weise erstreckt sich der Kunststoffkörper des Ballastgewichts teilweise in das zweite feste Material. Insbesondere kann vorgesehen sein, dass das zweite Material durch den Kunststoffkörper des Ballastgewichts vollständig durchsetzt ist. Dadurch können zweistoffige Ballastgewichte geschaffen werden, welche in vielfältiger Weise ausgestaltet werden können. Insbesondere kann dabei eine variable Formgebung dieser beiden Stoffe erzeugt werden, welche im Hinblick auf die Anordnung des Ballastgewichts am Laugenbehälter bzw. am Gehäuseteil und in dem Haushaltgerät optimiert ausgebildet werden kann.

In vorteilhafter Weise sind die erhabenen Verbindungselemente rippenartig ausgebildet. Es kann jedoch auch jede andere Formgebung der Verbindungselemente gestaltet werden, welche zu einer erhabenen Struktur des Verbindungselemente im Vergleich zum restlichen Kunststoffbereich führt. So können die Verbindungselemente beispielsweise auch stiftförmig oder spitzenförmig oder konusförmig ausgestaltet sein. Auch hier kann im Hinblick auf die Anforderungen des Ballastgewichts (Platzbedarf, Festigkeit, etc.) eine situationsabhängig optimierte Formgebung gewählt werden.

Es kann vorgesehen sein, dass der Kunststoffkörper des Ballastgewichts hakenförmig oder kammförmig ausgebildet ist. Dadurch kann einerseits die Verbindung des Kunststoffkörpers mit dem zweiten festen Material des Ballastgewichts verbessert werden und andererseits eine bestmögliche mechanische Verbindung mit dem Kunststoffbereich des Laugenbehälters im Hinblick auf Festigkeit erzielt werden.

Es kann vorgesehen sein, dass das Verbindungselement bzw. die Verbindungselemente an dem Laugengehälter ausgebildet ist und zum Verbinden mit dem Kunststoffkörper des Ballastgewichts mit einer im Wesentlichen gleichförmigen Kontaktfläche des Kunststoffkörper des Ballastgewichts kontaktierbar ist. Ebenso kann jedoch auch vorgesehen sein, dass die Verbindungselemente an dem Ballastgewicht ausgebildet ist und mit einer im Wesentlichen gleichförmigen Kontaktfläche des Kunststoffbereichs des Laugenbehälters kontaktierbar ist.

In vorteilhafter Weise ist eine Mehrzahl von erhabenen und vorzugsweise gleichgerichteten Verbindungselementen an dem Kunststoffbereich bzw. an dem Kunststoffkörper ausgebildet. Dabei ist es auch möglich, an den Kontaktflächen der beiden miteinander zu verbindenden Teile Verbindungselemente anzubringen und diese miteinander zu verschweißen. Durch eine Mehrzahl an Verbindungselementen gemäß Weiterbildung der Erfindung können mehrere Kontaktbereiche mit dem zu verbindenden Kunststoffbereich geschaffen werden, wodurch die Festigkeit der mechanischen Verbindung verbessert werden kann.

Es kann vorgesehen sein, dass das Ballastgewicht zumindest zwei separate Kunststoffkörper aufweist, welche mit einem Verbindungssteg verbunden sind. Bevorzugt ist der Verbindungssteg aus Kunststoff ausgebildet. Es kann jedoch auch vorgesehen sein, dass ein Armierungsdraht zur Verbindung von zumindest zwei Kunststoffkörpern angeordnet ist. Die Verbindung zwischen zumindest zwei separaten Kunststoffkörper des Ballastgewichts kann dadurch in vielfältiger Weise ausgestaltet werden.

Es kann vorgesehen sein, dass der Verbindungssteg und/oder der Armierungsdraht von dem zweiten Material des Ballastgewichts zumindest bereichsweise umgeben ist. Beispielsweise kann dieser in das zweite Material eingegossen sein. Dadurch kann eine feste Verbindung zwischen den Materialien geschaffen werden und eine positionsstabile Anordnung zumindest des Verbindungsstegs gewährleistet werden.

Das Ballastgewicht kann quader- oder ringförmig ausgebildet sein. Die Formgebung des Ballastgewichts ist jedoch dadurch nicht eingeschränkt und kann auch in vielfältiger sonstiger Weise ausgebildet sein.

Das Verbindungselement ist in bevorzugter Weise in den zugeordneten Kunststoffkörper integriert. Dadurch können der Kunststoffkörper und die Verbindungselemente einstückig hergestellt werden. Beispielsweise kann hier ein einziger Körper durch ein Spritzgussverfahren hergestellt werden.

In vorteilhafter Weise ist das Haushaltgerät als Geschirrspülmaschine, als Waschmaschine oder als kombinierter Waschtrockner ausgebildet.

Anhand mehrer, in schematischen Zeichnungen dargestellter Ausführungsbeispiele ist die Erfindung nachfolgend näher erläutert. Es zeigen
- Fig. 1: einen Teilbereich an der Frontseite eines Laugenbehälters, an der ein Ballastgewicht mit einem Kunststoffkörper mit eigenen Verbindungselementen zu befestigen ist;
- Fig. 2: einen Teilbereich an der Frontseite eines Laugenbehälters mit Verbindungselementen, an denen ein Ballastgewicht mit einem glattflächigen Kunststoffkörper zu befestigen ist;
- Fig. 3: bis
- Fig. 7: mehrere unterschiedliche Ausbildungen eines erfindungsgemäßen eines Ballastgewichts,
- Fig. 8: eine Ansicht auf Kontaktflächen eines sichelförmig gestalteten Ballastgewichts,
- Fig. 9: ein Ballastgewicht mit Verbindungselementen, das auf eine Mantelfläche eines Laugenbehälters zu befestigen ist, und
- Fig. 10: ein Ballastgewicht mit einer glatten Kontaktfläche, das auf einer durch Verbindungselemente strukturierten Mantelfläche eines Laugenbehälters zu befestigen ist.

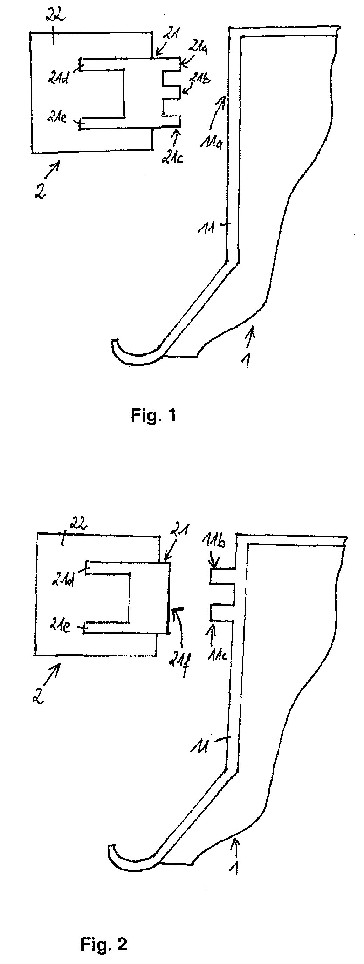

Der in Fig. 1 schematisch dargestellte Schnitt zeigt einen Teilbereich eines Laugenbehälters 1 einer nicht dargestellten Waschmaschine, an dessen Vorderwand 11 ein Ballastgewicht 2 befestigt werden soll. Dazu ist die Kontaktfläche 11 a vorgesehen.

Neben den hier gezeigten Ballastgewichten könne auch solche Ballastgewichte verwendet werden, in denen der Kunststoffkörper als in einer Betonmischung verteilte Kunststoffmasse vorliegt. Beispielsweise dafür amorphe uns teilkristalline Thermoplaste mit und ohne Zuschlagstoffen infrage. Dies kann übrigens auch wenigsten die Kontaktfläche(n) des Laugenbehälters 1 betreffen.

Das Ballastgewicht 2 ist in den Ausführungsbeispielen aus zwei unterschiedlichen Teilen mit festen Materialien ausgebildet. Dabei weist das Ballastgewicht 2 einen Kunststoffkörper 21 auf, der in einem zweiten Körper, dem Ballastkörper 22 aus Beton, eingebettet ist. Kunststoffkörper 21 und Ballastkörper 22 sind form- und kraftschlüssig miteinander verbunden. Das Ballastgewicht 2 ist in Fig. 1 als Quader ausgebildet.

Gemäß Fig. 1 ist der Kunststoffkörper 21 an seiner auf die Kontaktfläche 11 a des Laugenbehälters 1 weisenden Seite kammartig ausgebildet und weist dadurch drei erhabene Verbindungselemente 21 a, 21 b und 21 c auf. Diese Verbindungselemente 21 a bis 21 c ragen aus dem Kunststoffkörper 21 heraus und erstrecken sich im Wesentlichen in die gleiche Richtung. Im Ausführungsbeispiel sind diese erhabenen Verbindungselemente 21 a bis 21 c als Rippen ausgebildet.

Darüber hinaus weist der Kunststoffkörper 21 im Querschnitt längliche Ausläufer 21 d und 21 e auf, welche sich in Richtung des Ballastkörpers 22 erstrecken und vom Beton des Ballastkörpers 22 vollständig umgeben sind.

Zur Verbindung des Ballastgewichts 2 mit der Vorderwand 11 des Laugenbehälters 1 werden die erhabenen Verbindungselementen 21 a bis 21 c des Ballastgewichts 2 auf die Kontaktfläche 11 a aufgesetzt. Es entsteht dadurch ein mechanischer Kontakt zwischen der Kontaktfläche 11 a und diesen drei Verbindungselementen 21 a bis 21 c. Durch ein Kunststoffschweißverfahren, beispielsweise ein Vibrationsschweißen oder ein Spiegelschweißen, wird eine Schmelzflussverbindung zwischen dem Kunststoffkörper 21 des Ballastgewichts 2 und der Vorderwand 11 des Laugenbehälters 1 erzeugt. Dabei wird durch Aufschmelzen der erhabenen Verbindungselemente 21 a bis 21 c eine stoffschlüssige Verbindung mit der Kontaktfläche 11 a hergestellt. Die erhabenen Verbindungselemente 21 a bis 21 c dienen dabei als Materialvorrat für Schmelzmaterial, das nach der Herstellung der Verbindung in dieser Verbindung aufgeht.

Die dann ausgebildete mechanische Verbindung zwischen dem Ballastgewicht 2 und dem Laugenbehälter 1 ist gemäß den Ausführungsbeispielen derart gestaltet, dass bei einer Erwärmung insbesondere der Kunststoffe des Laugenbehälters 1 und des Ballastgewichts 2 diese Verbindung sich nicht lösen kann. Dazu ist Die Kontaktfläche 11 a am Laugenbehälter 1 an die entsprechende Verbindungsfläche des Kunststoffkörpers 21 des Ballastgewichts 2 und insbesondere an die Verbindungsflächen der erhabenen Verbindungselemente 21 a bis 21 c angepasst. Die Größe der Verbindungsflächen zwischen dem Kunststoffkörper 21, insbesondere seinen erhabenen Verbindungselementen 21 a und 21 c, und der Kontaktfläche 11 a des Laugenbehälters 1 kann entsprechend den zu erwartenden Kräften gewählt werden.

Außerdem hält die form- und kraftschlüssige Verbindung zwischen dem Kunststoffkörper 21 und dem Betonkörper 22 Erwärmungen durch Beheizung der Lauge und auftretenden Betriebskräften beim Schleudern einer Trommel der Waschmaschine stand.

In Fig. 2 ist eine zweite generelle Ausgestaltung des Ballastgewichts 2 und des Laugenbehälters 1 gezeigt. Im Unterschied zu dem Beispiel der Fig. 1 sind hier an dem Kunststoffkörper 21 keine erhabenen Verbindungselemente ausgebildet. Hier ist lediglich eine Kontaktfläche 21f am Ballastgewicht 2 ausgebildet, die der Vorderwand 11 des Laugenbehälters 1 zugewandt ist. Die Verbindung zwischen dem Kunststoffkörper 21 und dem Betonkörper 22 ist in gleicher Weise wie in Fig. 1 gestaltet.

Hier weist die Kontaktfläche der Vorderwand 11 des Laugenbehälters 1 erhabene Verbindungselemente 11b und 11 c auf. Ihre Anzahl ist lediglich beispielsweise gewählt und kann vorzugsweise nach oben abweichen. Die dargestellten Verbindungselemente 11b und 11 c erstrecken sich einstückig aus der Vorderwand 11 heraus. Zur Vorbereitung der Verbinden wird die Kontaktfläche 21 f des Kunststoffkörpers 21 des Ballastgewichts 2 mit den erhabenen Verbindungselementen 11 b und 11 c in Kontakt gebracht. Dann wird ein Kunststoffschweißverfahren zur Herstellung der stoffschlüssigen Verbindung angewendet.

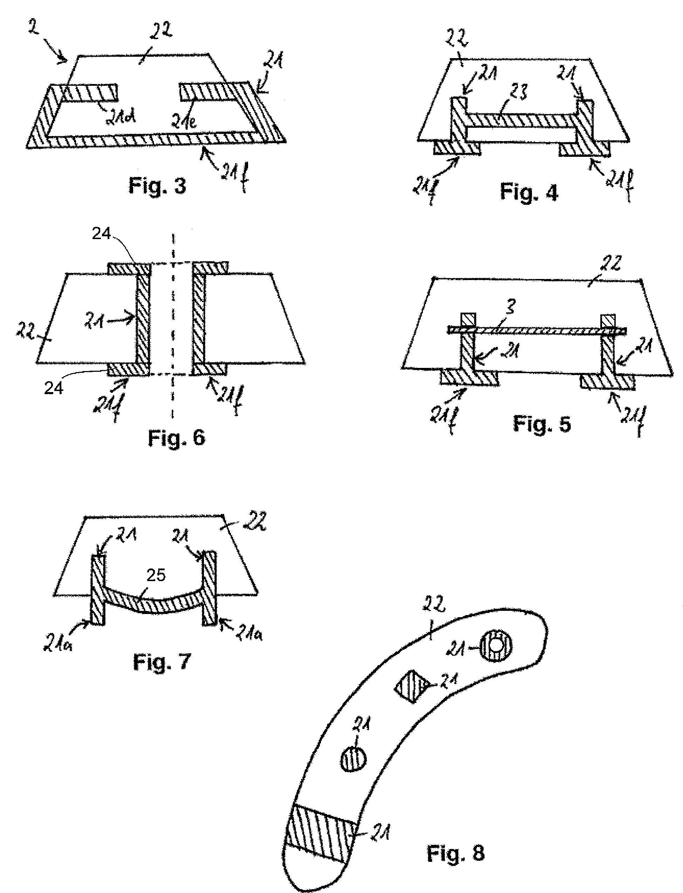

Der in Fig. 3 dargestellte Schnitt eines weiteren Ausführungsbeispiels eines Ballastgewichts 2 zeigt den Betonkörper 22 durch den Kunststoffkörper 21 teilummantelt. Dabei erstreckt sich die Kontaktfläche 21 f über die gesamte Breite des Betonkörpers 22. Die Extremitäten 21 d und 21 e erstrecken sich hier von der Seite her in das Innere des Betonkörpers 22 und sind von seinem Betonmaterial umgeben. Anders als hier dargestellt kann der Betonkörper 22 vollständig durch den Kunststoffkörper 21 ummantelt sein.

Die Ballastgewichte gemäß Fig. 3 bis 7 sind im Querschnitt eher trapezförmig gebaut, haben aber senkrecht zur Zeichnungsebene ebenfalls eine längere Erstreckung. Die Ballastgewichte 2 in Fig. 2 und 3 haben den Vorteil, dass ihre Kontaktflächen 21f völlig glatt gestaltet sind und dadurch in einfacher Weise von Betonresten befreit werden können. Darüber hinaus ist bei einer derartigen Ausgestaltung, bei der ein flächiger Bereich 21f am Ballastgewicht 2 und die erhabenen Verbindungselemente 11 b und 11 c am Laugenbehälter 1 ausgebildet sind, ein Verbinden durch ein Vibrationsschweißen vorteilhaft.

Das Ausführungsbeispiel eines Ballastgewichts 2 gemäß Fig. 4 weist zwei Kunststoffkörper 21 auf, die teilweise in den Betonkörper 22 eindringen. Die beiden Kunststoffkörper 21 sind im Querschnitt T-förmig ausgebildet (umgedrehtes T) und mit einem Verbindungssteg 23 verbunden, der einstückiger Bestandteil des Kunststoffkörpers 21 ist. Hier ist der Verbindungssteg 23 vollständig vom Betonmaterial des Betonkörpers 22 umgeben. Teile der Kunststoffkörper 21, nämlich die Querbalken des T, ragen aus dem Betonkörper 22 heraus. An ihnen sind Kontaktflächen 21f ausgebildet, die mit erhabenen Verbindungselementen 11 b und 11 c am Laugenbehälter 1 entsprechend Fig. 2 verbunden werden.

Ähnlich Fig. 4 sind die Ballastgewicht 2 in Fig. 5 mit Kunststoffkörpern 21 versehen, die in den Betonkörper 22 eindringen. Anstelle des Verbindungsstegs 23 in Fig. 4 sind aber die Kunststoffkörper 21 innerhalb des Betonkörpers 22 mittels eines Armierungsdrahts 3 miteinander verbunden. Der Armierungsdraht 3 kann aber auch zusätzlich zum Verbindungssteg 23 vorgesehen sein, um die Verbindung der beiden Kunststoffkörper 21 zu sichern. Es können auch eine Mehrzahl an Verbindungsstegen 23 und/oder eine Mehrzahl an Armierungsdrähten 3 vorgesehen sein. Der Armierungsdraht 3 bzw. mehrere davon dienen aber vor allem dazu, den Betonkörper zu stabilisieren, und können auf die gezeigte Weise dazu verwendet werden, den oder die Kunststoffkörper 21 im Beton zu verankern und ggf. miteinander zu verbinden.

Eine prinzipiell von den bisherigen Ausführungsformen des Ballastgewichts 2 abweichende Ausgestaltung zeigt Fig. 6, deren Kunststoffkörper 21 rohrförmig ausgebildet ist und den Betonkörper 22 vollständig durchsetzt. Aber auch hier sind Kontaktflächen 21 f ausgebildet, die der Verbindung mit erhabenen Verbindungselementen am Laugenbehälter 1 dienen. Der rohrförmige Kunststoffkörper 21 weist an beiden Enden Flansche 24 auf, die an den breiten Außenflächen des Betonkörpers 22 eng anliegen.

Das Ballastgewichts 2 gemäß Fig. 7 hat zwei im Wesentlichen streifenförmige Kunststoffkörper 21 mit rechteckigem Querschnitt. Sie sind mit dem Betonkörper 22 ebenfalls dadurch verbunden, dass sie teilweise in den Betonkörper eindringen. Ähnlich eines Verbindungsstegs 23 gemäß Fig. 4 sind aber die beiden Kunststoffkörper-Leisten 21 über einen bogenförmigen Verbindungssteg 25 miteinander verbunden sind. Der Verbindungssteg 25 dringt nur teilweise in den Betonkörper 22 ein, so dass er durch Form- und Kraftschluss mit ihm verbunden ist. An den äußeren Leistenflanken der Kunststoffkörper 21 angebrachte Verbindungselemente 21 a dienen zur Verbindung mit einem flächigen Bereich, beispielsweise dem Kontaktfläche 11a in Fig. 1 des Laugenbehälters 1. Zusätzlich könnten aber auch an der Außenseite des Verbindungsstegs 25 noch Verbindungselemente angebracht sein.

Fig. 8 zeigt ein Ballastgewicht 2 in einer Ansicht auf seine große Fläche, hier also auf die Kontaktflächen, die der Vorderwand des Laugenbehälters 1 zugewandt ist. Die bogenförmige Ausgestaltung des Ballastgewichts 2 folgt der Formung der Kontaktfläche 11 a an der Vorderwand des Laugenbehälters 1, die sich kreisringförmig um eine nicht dargestellte Beschickungsöffnung der Laugenbehälter-Vorderwand 11 erstreckt. Anhand dieser Ansicht werden unterschiedliche Ausformungen von Kontaktflächen an dem Kunststoffkörper 21 gezeigt. Es sind runde, viereckige, ringförmige Flächen dargestellt, die sich von der Seitenkante des Ballastgewichts 2 noch absetzen, ebenso wie eine Kontaktfläche, die sich über die gesamte Breite des Ballastgewichts 2 erstreckt, als Synonyme dafür, dass praktisch eine unbegrenzte Zahl von Ausgestaltungen möglich ist.

Jeder dieser Kontaktflächen des Kunststoffkörpers 21 kann zumindest ein erhabenes Verbindungselement 21 a (nicht dargestellt) aufweisen. Es kann jedoch auch vorgesehen sein, dass zumindest einer dieser Kunststoffkörper 21 einen flächigen Bereich 21 f (nicht dargestellt) aufweist, der mit zumindest einem erhabenen Verbindungselement des Laugenbehälters stoffschlüssig verbunden werden kann.

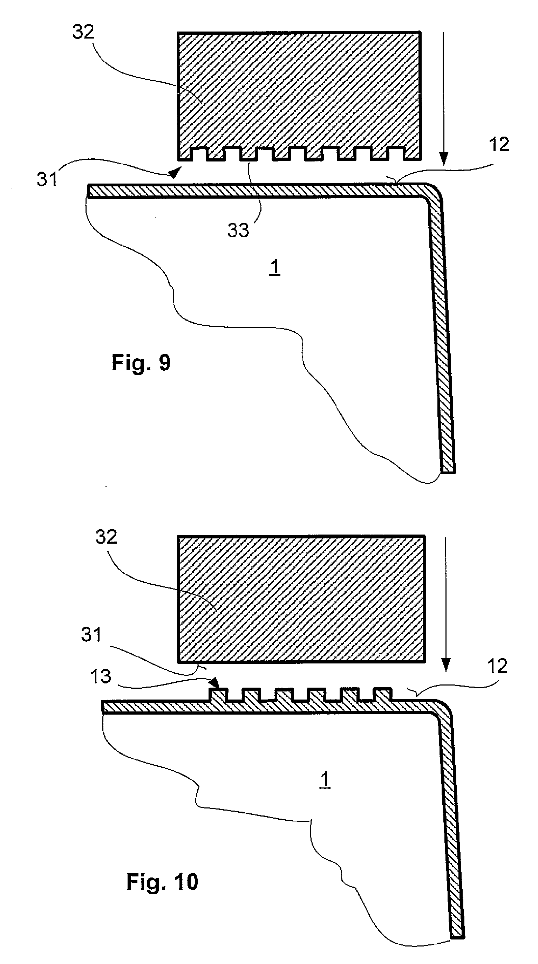

Schließlich zeigen noch Fig. 9 und 10 Ballastgewichte 32 im Querschnitt, die so ausgeformt sind, dass sie mit Ihrer Kontaktfläche 31 zum Laugenbehälter 1 der Krümmung der Mantelfläche 12 des Laugenbehälter 1 folgen. Dabei können die Kontaktflächen 31 wie in den übrigen Beispielen an Kunststoffkörpern der Ballastgewichte 32 angebracht sein; auf die detaillierte Wiedergabe der Gestaltung ist daher hier verzichtet worden. In ähnlicher Weise, wie es die Fig. 1 und 2 zeigen, können hier die Kontaktflächen 31 des Ballastgewichtes 32 und/oder die Kontaktflächen am Laugenbehältermantel 12 mit Verbindungselementen 33 bzw. 13 ausgestattet sein, um für die Verbindung durch die Anwendung eines Kunststoffschweißverfahrens gerüstet zu sein, zu dessen Vorbereitung die Ballastgewichte in Richtung des Pfeils auf die Kontaktfläche am Laugenbehältermantel 12 gepresst werden.

Durch die verschiedenen Ausführungsformen des Ballastgewichts 2 können somit verschiedenste Formgebungen gestaltet werden, welche aus zwei festen Materialien ausgebildet sind. Neben einem kostengünstigen Beton werden nur relativ einfache Kunststoffteile benötigt, die bei der Herstellung der Betonteile in die Werkzeugform einzulegen sind. Dadurch kann eine einfache Ausbildung des gesamten Ballastgewichts 2 realisiert werden, auch dann, wenn die Formgebungen des Betonkörpers 22 und des Kunststoffkörpers 21 komplexer ausgebildet sind. Durch die Materialwahl kann eine kostengünstige Realisierung des Ballastgewichts 2 gewährleistet werden.

Durch das Kunststoffschweißverfahren kann eine schnelle und sichere Verbindung hergestellt werden, wobei die Schweißverbindungen in einer einfachen Schweißanlage ohne weitere Zusatzstoffe vollautomatisch hergestellt werden können. Die Schweißverbindungen können sowohl für eine Ballastgewichtbefestigung an einer Vorderwand oder an einem Mantel oder an einem Boden des Laugenbehälters realisierbar sein. Darüber hinaus sind die Schweißverbindungen für Schwingsysteme mit großer Schleuderdrehzahl geeignet, weil Belastungskräfte großflächig in die jeweiligen Bauteile eingeleitet werden, so dass die Spannung in der mechanischen Verbindung sehr gering ist.

## Patentansprüche

1. Haushaltgerät, das einen Laugenbehälter (1), der zumindest bereichsweise aus Kunststoff ausgebildet ist, und mindestens ein Ballastgewicht (2) mit wenigstens einem Kunststoffkörper (21) aufweist, das an dem Laugenbehälter (1) befestigt ist, wobei die mechanische Verbindung des Kunststoffkörpers (21) des Ballastgewichts (2) mit einem Kunststoffbereich (11) des Laugenbehälters (1) durch ein Kunststoffschweißverfahren erzeugt ist und wobei an dem Kunststoffkörper (21) des Ballastgewichts (2) und/oder an dem Kunststoffbereich (11) des Laugenbehälters (1) zumindest ein erhabenes Verbindungselement (11b, 11c; 21a bis 21c) ausgebildet ist, weiches mit einer Kontaktfläche (11a; 21f) des zu verbindenden Kunststoffbereichs (11) bzw. des zu verbindenden Kunststoffkörpers (21) kontaktierbar ist, wobei die erhabenen Verbindungselemente (11b, 11c; 21a bis 21c) durch das Kunststoffschweißverfahren stoffschlüssig mit der Kontaktfläche (11 a; 21f) verbunden sind,
**dadurch gekennzeichnet,**
**dass** das Ballastgewicht (2) zumindest zwei separate Kunststoffkörper (21) aufweist, welche mit zumindest einem Verbindungssteg (23, 25) und/oder einem Armierungsdraht (3) verbunden sind und welche jeweils Kontaktflächen (21f) bzw. Verbindungselemente (21a) aufweisen, die mit der Kontaktfläche (11a) des Kunststoffbereichs (11) des Laugenbehälters (1) bzw, dem zumindest einen Verbindungselement (11b, 11c) des Laugenbehälters (1) stoffschlüssig verbunden sind.

2. Haushaltgerät nach Anspruch 1, **dadurch gekennzeichnet, dass** die Kunststoffkörper (21) des Ballastgewichts (2) in ein zweites festes Material eingebettet sind.

3. Haushaltgerät nach Anspruch 2, **dadurch gekennzeichnet, dass** das zweite feste Material einen Betonkörper (22) aus reinem Beton oder aus einer Betonverbindung bildet.

4. Haushaltgerät nach Anspruch 3, **dadurch gekennzeichnet, dass** sich die Kunststoffkörper (21) des Ballastgewichts (2) teilweise in den Betonkörper (22) erstrecken, insbesondere den Betonkörper (22) vollständig durchsetzt,

5. Haushaltgerät nach einem der Ansprüche 1 bis 4, **dadurch gekennzeichnet, dass** das Verbindungselement (11b, 11c; 21a bis 21c) rippenartig ausgebildet ist.

6. Haushaltgerät nach einem der Ansprüche 1 bis 5, **dadurch gekennzeichnet, dass** der Kunststoffkörper (21) des Ballastgewichts (2) hakenförmig oder kammförmig ausgebildet ist.

7. Haushaltgerät nach einem der Ansprüche 1 bis 6, **dadurch gekennzeichnet, dass** das Verbindungselement (11b, 11c) an dem Laugenbehälter (1) ausgebildet ist und zum Verbinden mit dem Kunststoffkörper (21) des Ballastgewicht (2) mit einer im Wesentlichen gleichförmigen Kontaktfläche (21f) des Kunststoffkörpers (21) des Ballastgewichts (2) verbindbar ist.

8. Haushaltgerät nach einem der Ansprüche 1 bis 7, **dadurch gekennzeichnet, dass** eine Mehrzahl von erhabenen und vorzugsweise gleichgerichteten Verbindungselementen (11b, 11c; 21a bis 21c) an dem Kunststoffbereich (11) bzw. an dem Kunststoffkörper (21) ausgebildet ist.

9. Haushaltgerät nach einem der Ansprüche 1 bis 8, **dadurch gekennzeichnet, dass** der Verbindungssteg (23, 25) aus Kunststoff ausgebildet ist.

10. Haushaltgerät nach einem der Ansprüche 1 bis 9, **dadurch gekennzeichnet, dass** das Ballastgewicht (2) wenigstens annähernd quader- oder ringförmig oder ringsegmentförmig ausgebildet ist.

11. Haushaltgerät nach einem der Ansprüche 1 bis 10, **dadurch gekennzeichnet, dass** das erhabene Verbindungselement (11b, 11c; 21a bis 21c) in den zugeordneten Kunststoffbereich (11) bzw. in den zugeordneten Kunststoffkörper (21) integriert ist.

12. Haushaltgerät nach einem der vorhergehenden Ansprüche, welches als Geschirrspülmaschine, als Waschmaschine oder als kombinierter Waschtrockner ausgebildet ist.

13. Haushaltgerät das einen Laugenbehälter (1), der zumindest bereichsweise aus Kunststoff ausgebildet ist, und mindestens ein Ballastgewicht (2) mit wenigstens einem Kunststoffkörper (21) aufweist, das an dem Laugenbehälter (1) befestigt ist, wobei die mechanische Verbindung des Kunststoffkörpers (21) des Ballastgewichts (2) mit einem Kunststoffbereich (11) des Laugenbehälters (1) durch ein Kunststoffschweißverfahren erzeugt ist, an dem Kunststoffkörper (21) des Barlastgewichts (2) und/oder an dem Kunststoffbereich (11) des Laugenbehälters (1) zumindest ein erhabenes Verbindungselement (11b, 11c; 21a bis 21c) ausgebildet ist, welches mit einer Kontaktfläche (11 a; 21f) des zu verbindenden Kunststoffbereichs (11) bzw. des zu verbindenden Kunststoffkörpers (21) kontaktierbar ist, die erhabenen Verbindungselemente (11b, 11c; 21 a bis 21c) durch das Kunststoffschweißverfahren stoffschlüssig mit der Kontaktfläche (11 a; 21f) verbunden sind, der Kunststoffkörper (21) des Ballastgewichts (2) in ein zweites festes Material eingebettet ist,
**dadurch gekennzeichnet,**
**dass** der Kunststoffkörper (21) als verteilte Mischung in dem zweiten festen Material vorliegt,

14. Haushaltgerät nach Anspruch, 13, **dadurch gekennzeichnet, dass** das zweite feste Material einen Betonkörper (22) aus reinem Beton oder aus einer Betonverbindung bildet.

15. Haushalfgerät nach Anspruch 13 oder Anspruch 14, welches als Geschirrspülmaschine, als Waschmaschine oder als kombinierter Waschtrockner ausgebildet ist.

## Claims

1. Household appliance, having a lye container (1), which is embodied at least in part in plastic, and has at least one ballast weight (2) with at least one plastic body (21) which is attached to the lye container (1), wherein the mechanical connection of the plastic body (21) of the ballast weight (2) to a plastic area (11) of the lye container (1) is created by means of a plastic welding process and wherein at least one raised connecting element (11b, 11c; 21a to 21c) is embodied on the plastic body (21) of the ballast weight (2) and/or on the plastic area (11) of the lye container (1), which connecting element (11b, 11c; 21 a to 21 c) can come into contact with a contact surface (11a; 21f) of the plastic area (11) to be connected or the plastic body (21) to be connected, wherein the raised connecting elements (11b, 11c; 21 a to 21 c) are connected to the contact surface (11a; 21f) in a bonded manner by means of the plastic welding process,
**characterised in that**
the ballast weight (2) has at least two separate plastic bodies (21) which are connected to at least one connecting stud (23, 25) and/or a reinforced wire (3) and which in each case have contact surfaces (21f) or connecting elements (21a), which are connected in a bonded manner with the contact surface (11a) of the plastic area (11) of the lye container (1) or the at least one connecting element (11b, 11c) of the lye container (1).

2. Household appliance according to claim 1, **characterised in that** the plastic body (21) of the ballast weight (2) is embedded in a second solid material.

3. Household appliance according to claim 2, **characterised in that** the second solid material takes the form of a concrete body (22) made of pure concrete or a concrete compound.

4. Household appliance according to claim 3, **characterised in that** the plastic body (21) of the ballast weight (2) partially extends into the concrete body (22), in particular completely intersperses the concrete body (22).

5. Household appliance according to one of the claims 1 to 4, **characterised in that** the connecting element (11b, 11c; 21a to 21 c) is embodied in ribbed form.

6. Household appliance according to one of the claims 1 to 5, **characterised in that** the plastic body (21) of the ballast weight (2) is embodied in the form of a hook or comb.

7. Household appliance according to one of the claims 1 to 6, **characterised in that** the connecting element (11b, 11c) is embodied on the lye container (1) and for connection purposes with the plastic body (21) of the ballast weight (2) can be connected to an essentially uniform contact surface (21f) of the plastic body (21) of the ballast weight (2).

8. Household appliance according to one of the claims 1 to 7, **characterised in that** a multiplicity of raised and preferably similarly oriented connecting elements (11b, 11c; 21 a to 21 c) is embodied on the plastic area (11) or on the plastic body (21).

9. Household appliance according to one of the claims 1 to 8, **characterised in that** the connecting stud (23, 25) is embodied in plastic.

10. Household appliance according to one of the claims 1 to 9, **characterised in that**, the ballast weight (2) is embodied at least approximately in cuboid or annular form or in the form of a segment of a ring.

11. Household appliance according to one of the claims 1 to 10, **characterised in that** the raised connecting element (11b, 11c; 21 a to 21 c) is integrated in the assigned plastic area (11) or in the assigned plastic body (21).

12. Household appliance according to one of the preceding claims which is embodied as a dishwasher, as a washing machine or as a combined washer/dryer.

13. Household appliance, having a lye container (1), which is embodied at least in part in plastic, and has at least one ballast weight (2) with at least one plastic body (21) which is attached to the lye container (1), wherein the mechanical connection of the plastic body (21) of the ballast weight (2) to a plastic area (11) of the lye container (1) is created by means of a plastic welding process, at least one raised connecting element (11b, 11c; 21 a to 21 c) is embodied on the plastic body (21) of the ballast weight (2) and/or on the plastic area (11) of the lye container (1), which can come into contact with a contact surface (11a; 21f) of the plastic area to be connected (11) or the plastic body (21) to be connected, the raised connecting elements (11b, 11c; 21a to 21c) can be connected to the contact surface (11a; 21f) in a bonded manner by means of the plastic welding process, the plastic body (21) of the ballast weight (2) is embedded in a second solid material,
**characterised in that**
the plastic body (21) is present as a distributed mixture in the second solid material.

14. Household appliance according to claim 13, **characterised in that** the second solid material takes the form of a concrete body (22) made of pure concrete or a concrete compound.

15. Household appliance according to claim 13 or claim 14 which is embodied as a dishwasher, as a washing machine or as a combined washer/dryer.

## Revendications

1. Appareil ménager, comportant une cuve de lavage (1) réalisée au moins par endroits en matière plastique et au moins un poids de lestage (2) comprenant au moins un corps en matière plastique (21) fixé à la cuve de lavage (1), la liaison mécanique entre le corps en matière plastique (21) du poids de lestage (2) et une zone en matière plastique (11) de la cuve de lavage (1) étant obtenue par un procédé de soudage de matières plastiques et au moins un élément de liaison (11 b, 11 c ; 21 a à 21 c) en relief étant formé sur le corps en matière plastique (21) du poids de lestage (2) et/ou sur la zone en matière plastique (11) de la cuve de lavage (1), lequel élément peut être mis en contact avec une surface de contact (11a ; 21f) de la zone en matière plastique (11) à relier resp. du corps en matière plastique (21) à relier, les éléments de liaison (11 b, 11 c ; 21 a à 21 c) en relief étant reliés à la surface de contact (11 a ; 21f) par liaison de matière, grâce au procédé de soudage de matières plastiques,
**caractérisé en ce que**
le poids de lestage (2) comprend au moins deux corps en matière plastique (21) séparés, qui sont reliés à au moins une entretoise de liaison (23, 25) et/ou un fil d'armature (3) et qui ont chacun des surfaces de contact (21f) resp. des éléments de liaison (21a) qui sont reliés par liaison de matière à ladite surface de contact (11a) de la zone en matière plastique (11) de la cuve de lavage (1) resp. audit au moins un élément de liaison (11 b, 11 c) de la cuve de lavage (1).

2. Appareil ménager selon la revendication 1, **caractérisé en ce que** les corps en matière plastique (21) du poids de lestage (2) sont noyés dans un second matériau solide.

3. Appareil ménager selon la revendication 2, **caractérisé en ce que** le second matériau solide forme un corps en béton (22) constitué de béton pur ou d'un composé de béton.

4. Appareil ménager selon la revendication 3, **caractérisé en ce que** les corps en matière plastique (21) du poids de lestage (2) s'étendent partiellement dans le corps en béton (22), en particulier traversent complètement le corps en béton (22).

5. Appareil ménager selon l'une des revendications 1 à 4, **caractérisé en ce que** l'élément de liaison (11b, 11 c ; 21a à 21c) est réalisé à la manière d'une nervure.

6. Appareil ménager selon l'une des revendications 1 à 5, **caractérisé en ce que** le corps en matière plastique (21) du poids de lestage (2) est réalisé en forme de crochet ou en forme de peigne.

7. Appareil ménager selon l'une des revendications 1 à 6, **caractérisé en ce que** l'élément de liaison (11 b, 11 c) est formé sur la cuve de lavage (1) et, pour être relié au corps en matière plastique (21) du poids de lestage (2), peut être relié à une surface de contact (21f) sensiblement uniforme du corps en matière plastique (21) du poids de lestage (2).

8. Appareil ménager selon l'une des revendications 1 à 7, **caractérisé en ce qu'**une pluralité d'éléments de liaisons (11 b, 11 c ; 21 a à 21 c) en relief et de préférence dirigés dans la même direction sont formés sur la zone en matière plastique (11) resp. sur le corps en matière plastique (21).

9. Appareil ménager selon l'une des revendications 1 à 8, **caractérisé en ce que** l'entretoise de liaison (23, 25) est réalisée en matière plastique.

10. Appareil ménager selon l'une des revendications 1 à 9, **caractérisé en ce que** le poids de lestage (2) est réalisé au moins approximativement en forme de parallélépipède ou d'anneau ou en forme de segment d'anneau.

11. Appareil ménager selon l'une des revendications 1 à 10, **caractérisé en ce que** l'élément de liaison (11 b, 11 c ; 21 a à 21 c) en relief est intégré dans la zone en matière plastique (11) associée resp. dans le corps en matière plastique (21) associé.

12. Appareil ménager selon l'une des revendications précédentes, lequel appareil est réalisé comme lave-vaisselle, comme lave-linge ou comme lave-linge/sèche-linge combiné.

13. Appareil ménager, comportant une cuve de lavage (1) réalisée au moins en partie en matière plastique et au moins un poids de lestage (2) comprenant au moins un corps en matière plastique (21) fixé à la cuve de lavage (1), la liaison mécanique entre le corps en matière plastique (21) du poids de lestage (2) et une zone en matière plastique (11) de la cuve de lavage (1) étant obtenue par un procédé de soudage de matières plastiques, au moins un élément de liaison (11 b, 11 c ; 21 a à 21 c) étant formé sur le corps en matière plastique (21) du poids de lestage (2) et/ou sur la zone en matière plastique (11) de la cuve de lavage (1), lequel élément peut être mis en contact avec une surface de contact (11 a ; 21f) de la zone en matière plastique (11) à relier resp. du corps en matière plastique (21) à relier, les éléments de liaison (11 b, 11 c ; 21 a à 21 c) en relief étant reliés à la surface de contact (11a ; 21 f) par liaison de matière, grâce au procédé de soudage de matières plastiques, le corps en matière plastique (21) du poids de lestage (2) étant noyé dans un second matériau solide,
**caractérisé en ce que**
le corps en matière plastique (21) se présente sous forme de mélange réparti dans le second matériau solide.

14. Appareil ménager selon la revendication 13, **caractérisé en ce que** le second matériau solide forme un corps en béton (22) constitué de béton pur ou d'un composé de béton.

15. Appareil ménager selon la revendication 13 ou la revendication 14, lequel appareil est réalisé comme lave-vaisselle, comme lave-linge ou comme lave-linge/sèche-linge combiné.
